# EUROPEAN PATENT APPLICATION

(11) **EP 4 495 756 A1**
(43) Date of publication of application: **22.01.2025**
(21) Application number: 23795148.8
(22) Date of filing: 19.04.2023
(51) Int. Cl.: G06F 3/14

(54) **SCREEN-ON CONTROL METHOD, ELECTRONIC DEVICE, AND COMPUTER-READABLE STORAGE MEDIUM**

(30) Priority: 28.04.2022 CN 202210471024
(71) Applicant: Huawei Technologies Co., Ltd., Shenzhen, Guangdong 518129 (CN)
(72) Inventor: LU, Xuyu, Shenzhen, Guangdong 518129 (CN); WANG, Huaiyong, Shenzhen, Guangdong 518129 (CN)
(74) Representative: Pfenning, Meinig & Partner mbB
(86) International application number: PCT/CN2023/089264
(87) International publication number: WO 2023/207715

(57) **Abstract**

This application is applicable to the field of terminal devices, and provides a screen-on control method, an electronic device, and a computer-readable storage medium. In the screen-on control method provided in this application, after a user performs a screen-on operation on the electronic device, a first processor may draw a screen-on interface in response to the screen-on operation. A second processor may perform a screen initialization operation in parallel when the first processor draws the screen-on interface. After determining that the second processor completes the screen initialization operation, the first processor may send the screen-on interface to a display for display. According to the foregoing method, the first processor and the second processor of the electronic device can execute different screen-on processing procedures in parallel, so that screen-on processing procedures to be executed by a single processor are reduced, to accelerate a screen-on speed of the electronic device to some extent. The method can effectively improve user experience, and has strong usability and practicability.

## Description

This application claims priority to Chinese Patent Application No. 202210471024.X, filed with the China National Intellectual Property Administration on April 28, 2022 and entitled "SCREEN-ON CONTROL METHOD, ELECTRONIC DEVICE, AND COMPUTER-READABLE STORAGE MEDIUM", which is incorporated herein by reference in its entirety.

### TECHNICAL FIELD

This application relates to the field of terminal devices, and in particular, to a screen-on control method, an electronic device, and a computer-readable storage medium.

### BACKGROUND

With development of the science and technology, various electronic devices with displays gradually enter thousands of households. When users use these electronic devices with displays, there may be a large quantity of scenarios in which the electronic devices need to be screen-on.

In these screen-on scenarios, a screen-on speed of the electronic device is closely related to user experience. A shorter time taken for screen-on of the electronic device indicates better user experience, and a longer time taken for screen-on of the electronic device indicates poorer user experience.

However, in an existing screen-on solution, the electronic device needs to execute a series of screen-on processing procedures such as image drawing and display control. This takes a long time and causes poor user experience.

### SUMMARY

Embodiments of this application provide a screen-on control method, an electronic device, and a computer-readable storage medium, to resolve, to some extent, a problem that an existing screen-on solution takes a long time and user experience is poor.

According to a first aspect, an embodiment of this application provides a screen-on control method. The method is applied to an electronic device. The electronic device is configured with a first processor and a second processor. The method includes:

The first processor draws a screen-on interface in response to a screen-on operation of a user.

The second processor performs a screen initialization operation in parallel when the first processor draws the screen-on interface.

The first processor sends the screen-on interface to a display after determining that the second processor completes the screen initialization operation.

The display displays the screen-on interface.

It should be noted that in the screen-on control method provided in this application, after the user performs the screen-on operation on the electronic device, the first processor may draw the screen-on interface.

The second processor may perform the screen initialization operation in parallel when the first processor draws the screen-on interface.

The first processor may send the screen-on interface to the display after determining that the second processor completes the screen initialization operation.

The display may receive and display the screen-on interface.

In other words, in the screen-on control method provided in this application, the electronic device can execute different screen-on processing procedures in parallel by using the first processor and the second processor. The screen-on control method provided in this application is different from a current manner in which a single processor executes screen-on processing procedures in series in that the screen-on processing procedures to be executed by the single processor can be reduced, to reduce time taken by the electronic device to execute the screen-on processing procedures, accelerate a screen-on speed of the electronic device, and improve user experience. The method has strong usability and practicability.

In a possible implementation of the first aspect, after that the second processor performs a screen initialization operation in parallel, the method further includes:

The second processor sends display brightness to the display, where the display brightness is obtained by the second processor through calculation based on ambient light data.

Correspondingly, that the display displays the screen-on interface includes:

The display displays the screen-on interface based on the display brightness.

It should be noted that when displaying the screen-on interface, the display may display the screen-on interface based on preset display brightness.

Alternatively, the display may display the screen-on interface based on dynamically adjusted display brightness.

When the display displays the screen-on interface based on the dynamically adjusted display brightness, the screen-on processing procedures may further include a brightness setting operation.

In some embodiments, the brightness setting operation may be performed by the second processor.

In this case, the second processor may obtain the ambient light data collected by an ambient light sensor, and calculate the display brightness based on the ambient light data and a preset brightness algorithm.

Subsequently, the second processor may send the display brightness to the display after completing the screen initialization operation.

After receiving the display brightness and the screen-on interface, the display may display the screen-on interface based on the display brightness.

According to the foregoing method, the electronic device may perform the brightness setting operation by using the second processor, so that the display displays the screen-on interface with the proper display brightness, which helps improve user experience.

In a possible implementation of the first aspect, that the first processor sends the screen-on interface to a display after determining that the second processor completes the screen initialization operation includes:

After determining that the second processor sends the display brightness to the display, the first processor sends the screen-on interface to the display.

It should be noted that the second processor needs to first complete the screen initialization operation, and then can send the display brightness to the display.

Therefore, in some embodiments, the first processor may further detect whether the second processor sends the display brightness to the display.

If the first processor determines that the second processor sends the display brightness to the display, it indicates that the second processor completes the screen initialization operation and the brightness setting operation.

In this case, the first processor may send the screen-on interface to the display.

If the first processor determines that the second processor does not send the display brightness to the display, it indicates that the second processor may not complete the screen initialization operation and the brightness setting operation.

In this case, the first processor may wait for the second processor to send the display brightness to the display.

In addition, there is no necessary dependency relationship between sending the screen-on interface by the first processor to the display and sending the display brightness by the second processor to the display. Therefore, in some other embodiments, the first processor may not detect whether the second processor sends the display brightness to the display.

In this case, the first processor may directly send the screen-on interface to the display after determining that the second processor completes the screen initialization operation.

In a possible implementation of the first aspect, after it is determined that the second processor completes the screen initialization operation, the method further includes:

The first processor sends display brightness to the display, where the display brightness is obtained by the first processor through calculation based on ambient light data.

Correspondingly, that the display displays the screen-on interface includes:

The display displays the screen-on interface based on the display brightness.

It should be noted that, in some other embodiments, the foregoing brightness setting operation may alternatively be performed by the first processor.

In this case, the first processor may obtain the ambient light data collected by an ambient light sensor, and calculate the display brightness based on the ambient light data and a preset brightness algorithm.

Subsequently, the first processor may send the display brightness to the display after determining that the second processor completes the screen initialization operation.

After receiving the display brightness and the screen-on interface, the display may display the screen-on interface based on the display brightness.

According to the foregoing method, the electronic device may perform the brightness setting operation by using the first processor, so that the display displays the screen-on interface with the proper display brightness, which helps improve user experience.

In a possible implementation of the first aspect, before that the first processor draws a screen-on interface, the method further includes:

The second processor detects the screen-on operation of the user, and sends a screen-on notification to the first processor.

Correspondingly, that the first processor draws a screen-on interface in response to a screen-on operation of a user includes:

The first processor draws the screen-on interface in response to the screen-on notification.

It should be noted that, in some embodiments, the electronic device may detect, by using the second processor, whether the user performs the screen-on operation.

In this case, the second processor may process sensor data collected by a sensor.

The sensor may include any one or more types of sensors of a pressure sensor, a gyroscope sensor, an acceleration sensor, an optical proximity sensor, a fingerprint sensor, a touch sensor, and the like.

After obtaining the sensor data, the second processor may analyze the sensor data to detect whether a screen-on event occurs.

The screen-on event may be understood as the screen-on operation performed by the user on the electronic device. A specific representation form of the screen-on operation may be set according to an actual requirement. For example, the screen-on operation may include any one or more operations of pressing a physical button of the electronic device by the user, performing a touch operation by the user on the display of the electronic device, moving the electronic device by the user along a specific motion trajectory, and the like.

Subsequently, if the second processor detects the screen-on event, the second processor may send the screen-on notification to the first processor to wake up the first processor.

After receiving the screen-on notification, the first processor may enter a working state, and start to draw the screen-on interface.

According to the foregoing method, the electronic device may detect the screen-on operation of the user by using a single second processor, to reduce power consumption of the electronic device and improve a battery life of the electronic device.

In a possible implementation of the first aspect, that the first processor draws a screen-on interface in response to a screen-on operation of a user includes:

The first processor detects the screen-on operation of the user.

The first processor draws the screen-on interface in response to the screen-on operation.

It should be noted that, in some other embodiments, the electronic device may alternatively detect, by using the first processor, whether the user performs the screen-on operation.

In this case, the first processor may process sensor data collected by a sensor.

Subsequently, if the first processor detects the screen-on event, the first processor may start to draw the screen-on interface.

In a possible implementation of the first aspect, that the second processor performs a screen initialization operation in parallel includes:

The second processor powers on the display, and sends an initialized timing parameter to the display.

It should be noted that the screen initialization operation may include powering on the display, and sending the initialized timing parameter to the display.

In a possible implementation of the first aspect, after that the second processor performs a screen initialization operation in parallel, the method further includes:

The second processor sends a first notification to the first processor after completing the screen initialization operation.

Correspondingly, that the first processor sends the screen-on interface to a display after determining that the second processor completes the screen initialization operation includes:

The first processor sends the screen-on interface to the display in response to the first notification.

It should be noted that a manner in which the first processor detects whether the second processor completes the screen initialization operation may be set according to an actual requirement.

In some embodiments, the second processor may send the first notification to the first processor after completing the screen initialization operation.

In this case, the first processor may determine, based on the first notification, that the second processor completes the screen initialization operation. Therefore, the first processor may send the screen-on interface to the display in response to the first notification.

In a possible implementation of the first aspect, that the first processor sends the screen-on interface to a display after determining that the second processor completes the screen initialization operation includes:

The first processor detects a value of a target storage unit.

After it is detected that the value of the target storage unit is a target value, the first processor sends the screen-on interface to the display, where the target value indicates that the second processor completes the screen initialization operation.

It should be noted that, in some other embodiments, the first processor may also detect the value of the target storage unit. The value of the target storage unit may indicate whether the second processor completes the screen initialization operation.

When it is detected by the first processor that the value of the target storage unit is the target value, it indicates that the second processor completes the screen initialization operation. In this case, the first processor may send the screen-on interface to the display.

A manner of disposing the target storage unit may be selected according to an actual requirement. For example, in some embodiments, the target storage unit may be disposed in a register of the display. In some other embodiments, the target storage unit may alternatively be disposed in a non-volatile memory of the electronic device. In some other embodiments, the target storage unit may alternatively be disposed in another memory of the electronic device. A manner of disposing the target storage unit is not limited in embodiments of this application.

In addition, the value of the target storage unit may be actively modified by the second processor, or may be automatically updated.

In some embodiments, the second processor may modify the value of the target storage unit from a non-target value to the target value after completing the screen initialization operation.

In some other embodiments, the value of the target storage unit may be associated with a status of the display. After the second processor completes the screen initialization operation, the value of the target storage unit may be automatically updated to the target value based on the status of the display.

According to the foregoing method, the first processor may determine, in a numerical query manner, whether the second processor completes the screen initialization operation. This is easy to operate and convenient to use.

In a possible implementation of the first aspect, the first processor is an application processor, and the second processor is a micro-controller unit.

According to a second aspect, an embodiment of this application provides a screen-on control method. The method is applied to an electronic device. The electronic device is configured with a first processor and a second processor. The method includes:

The first processor draws a screen-on interface in response to a screen-on operation of a user.

The first processor performs a screen initialization operation.

The first processor sends the screen-on interface to a display after completing the screen initialization operation.

When the first processor draws the screen-on interface, and/or the first processor performs the screen initialization operation, the second processor calculates display brightness in parallel based on ambient light data.

The second processor sends the display brightness to the display after determining that the first processor completes the screen initialization operation.

The display displays the screen-on interface based on the display brightness.

It should be noted that, in another screen-on control method provided in this application, the first processor may be responsible for drawing the screen-on interface and performing the screen initialization operation.

When the first processor draws the screen-on interface, and/or the first processor performs the screen initialization operation, the second processor may calculate the display brightness in parallel based on the ambient light data.

Subsequently, the first processor may send the screen-on interface to the display after completing the screen initialization operation.

The second processor may send the display brightness to the display after determining that the first processor completes the screen initialization operation.

After receiving the screen-on interface and the display brightness, the display may display the screen-on interface based on the display brightness.

According to the foregoing method, the electronic device can execute different screen-on processing procedures in parallel by using the first processor and the second processor. The screen-on control method provided in this application is different from a current manner in which a single processor executes screen-on processing procedures in series in that the screen-on processing procedures to be executed by the single processor can be reduced, to reduce time taken by the electronic device to execute the screen-on processing procedures, accelerate a screen-on speed of the electronic device, and improve user experience. The method has strong usability and practicability.

According to a third aspect, an embodiment of this application provides a screen-on control method. The method is applied to a first processor, and includes:
drawing a screen-on interface in response to a screen-on operation of a user;
sending, after determining that a second processor completes a screen initialization operation, the screen-on interface to a display for display.

It should be noted that, after the user performs the screen-on operation on the electronic device, the first processor may draw the screen-on interface.

In this case, the second processor may perform the screen initialization operation in parallel.

After determining that the second processor completes the screen initialization operation, the first processor may send the screen-on interface to the display for display.

According to the foregoing method, the electronic device can execute different screen-on processing procedures in parallel by using the first processor and the second processor. The screen-on control method provided in this application is different from a current manner in which a single processor executes screen-on processing procedures in series in that the screen-on processing procedures to be executed by the single processor can be reduced, to reduce time taken by the electronic device to execute the screen-on processing procedures, accelerate a screen-on speed of the electronic device, and improve user experience. The method has strong usability and practicability.

In a possible implementation of the third aspect, the sending, after determining that a second processor completes a screen initialization operation, the screen-on interface to a display for display includes:
detecting a value of a target storage unit; and
after it is detected that the value of the target storage unit is a target value, sending the screen-on interface to the display for display, where the target value indicates that the second processor completes the screen initialization operation.

In a possible implementation of the third aspect, the sending, after determining that a second processor completes a screen initialization operation, the screen-on interface to a display for display includes:
receiving a first notification sent by the second processor, where the first notification indicates that the second processor completes the screen initialization operation; and
sending, in response to the first notification, the screen-on interface to the display for display.

In a possible implementation of the third aspect, the method further includes:
receiving a second notification sent by the second processor, where the second notification indicates that the second processor sends display brightness to the display, and the display brightness is obtained by the second processor through calculation based on ambient light data.

In a possible implementation of the third aspect, the sending, in response to the first notification, the screen-on interface to the display for display includes:
sending, in response to the first notification and the second notification, the screen-on interface to the display for display.

In a possible implementation of the third aspect, after it is determined that the second processor completes the screen initialization operation, the method further includes:
sending display brightness to the display, where the display brightness is obtained by the first processor through calculation based on ambient light data.

In a possible implementation of the third aspect, the drawing a screen-on interface in response to a screen-on operation of a user includes:
receiving a screen-on notification sent by the second processor; and
drawing the screen-on interface in response to the screen-on notification.

In a possible implementation of the third aspect, the drawing a screen-on interface in response to a screen-on operation of a user includes:
detecting the screen-on operation of the user; and
drawing the screen-on interface in response to the screen-on operation.

In a possible implementation of the third aspect, the first processor is an application processor, and the second processor is a micro-controller unit.

According to a fourth aspect, an embodiment of this application provides a screen-on control method. The method is applied to a second processor, and includes:
obtaining ambient light data in response to a screen-on operation of a user, and calculating display brightness based on the ambient light data; and
sending the display brightness to a display after determining that a first processor completes a screen initialization operation.

It should be noted that, after the user performs the screen-on operation on the electronic device, the second processor may obtain the ambient light data, and calculate the display brightness based on the ambient light data.

In this case, the first processor may perform the screen initialization operation in parallel.

After determining that the first processor completes the screen initialization operation, the second processor may send the display brightness to the display, so that the display displays the screen-on interface based on the display brightness.

According to the foregoing method, the electronic device can execute different screen-on processing procedures in parallel by using the first processor and the second processor. The screen-on control method provided in this application is different from a current manner in which a single processor executes screen-on processing procedures in series in that the screen-on processing procedures to be executed by the single processor can be reduced, to reduce time taken by the electronic device to execute the screen-on processing procedures, accelerate a screen-on speed of the electronic device, and improve user experience. The method has strong usability and practicability.

According to a fifth aspect, an embodiment of this application provides an electronic device, including a first processor, a second processor, and a display.

The first processor is configured to draw a screen-on interface in response to a screen-on operation of a user.

The second processor is configured to perform a screen initialization operation in parallel when the first processor draws the screen-on interface.

The first processor is further configured to send the screen-on interface to the display after determining that the second processor completes the screen initialization operation.

The display is configured to display the screen-on interface.

In a possible implementation of the fifth aspect, the second processor is further configured to send display brightness to the display. The display brightness is obtained by the second processor through calculation based on ambient light data.

The display is specifically configured to display the screen-on interface based on the display brightness.

In a possible implementation of the fifth aspect, the first processor is specifically configured to: after determining that the second processor sends the display brightness to the display, send the screen-on interface to the display.

In a possible implementation of the fifth aspect, the first processor is further configured to send display brightness to the display. The display brightness is obtained by the first processor through calculation based on ambient light data.

Correspondingly, the display is specifically configured to display the screen-on interface based on the display brightness.

In a possible implementation of the fifth aspect, the second processor is further configured to detect the screen-on operation of the user, and send a screen-on notification to the first processor.

Correspondingly, the first processor is specifically configured to draw the screen-on interface in response to the screen-on notification.

In a first possible implementation of the fifth aspect, the first processor is specifically configured to:
detect the screen-on operation of the user; and
draw the screen-on interface in response to the screen-on operation.

In a possible implementation of the fifth aspect, the second processor is specifically configured to power on the display, and send an initialized timing parameter to the display.

In a possible implementation of the fifth aspect, the second processor is further configured to send a first notification to the first processor after completing the screen initialization operation.

Correspondingly, the first processor is specifically configured to send the screen-on interface to the display in response to the first notification.

In a first possible implementation of the fifth aspect, the first processor is specifically configured to:
detect a value of a target storage unit; and
after it is detected that the value of the target storage unit is a target value, send the screen-on interface to the display, where the target value indicates that the second processor completes the screen initialization operation.

In a possible implementation of the fifth aspect, the first processor is an application processor, and the second processor is a micro-controller unit.

According to a sixth aspect, an embodiment of this application provides an electronic device, including a first processor, a second processor, and a display.

The first processor is configured to draw a screen-on interface in response to a screen-on operation of a user.

The first processor is further configured to perform a screen initialization operation.

The first processor is further configured to send the screen-on interface to the display after completing the screen initialization operation.

The second processor is configured to: when the first processor draws the screen-on interface, and/or the first processor performs the screen initialization operation, calculate display brightness in parallel based on ambient light data.

The second processor is further configured to send the display brightness to the display after determining that the first processor completes the screen initialization operation.

The display is configured to display the screen-on interface based on the display brightness.

According to a seventh aspect, an embodiment of this application provides a first processor, including:
an interface drawing module, configured to draw a screen-on interface in response to a screen-on operation of a user; and
an interface sending module, configured to: after determining that a second processor completes a screen initialization operation, send the screen-on interface to a display for display.

In a possible implementation of the seventh aspect, the interface sending module is specifically configured to:
detect a value of a target storage unit; and
after it is detected that the value of the target storage unit is a target value, send the screen-on interface to the display for display, where the target value indicates that the second processor completes the screen initialization operation.

In a possible implementation of the seventh aspect, the interface sending module is specifically configured to:
receive a first notification sent by the second processor, where the first notification indicates that the second processor completes the screen initialization operation; and
send, in response to the first notification, the screen-on interface to the display for display.

In a possible implementation of the seventh aspect, the first processor further includes:
a second notification module, configured to receive a second notification sent by the second processor, where the second notification indicates that the second processor sends display brightness to the display, and the display brightness is obtained by the second processor through calculation based on ambient light data.

In a possible implementation of the seventh aspect, the interface sending module is specifically configured to send, in response to the first notification and the second notification, the screen-on interface to the display for display.

In a possible implementation of the seventh aspect, the first processor further includes:
a brightness setting module, configured to send display brightness to the display, where the display brightness is obtained by the first processor through calculation based on ambient light data.

In a possible implementation of the seventh aspect, the interface drawing module is specifically configured to:
receive a screen-on notification sent by the second processor; and
draw the screen-on interface in response to the screen-on notification.

In a possible implementation of the seventh aspect, the interface drawing module is specifically configured to:
detect the screen-on operation of the user; and
draw the screen-on interface in response to the screen-on operation.

In a possible implementation of the seventh aspect, the first processor is an application processor, and the second processor is a micro-controller unit.

According to an eighth aspect, an embodiment of this application provides a second processor, including:
a brightness calculation module, configured to obtain ambient light data in response to a screen-on operation of a user, and calculate display brightness based on the ambient light data; and
a brightness sending module, configured to send the display brightness to a display after determining that a first processor completes a screen initialization operation.

According to a ninth aspect, an embodiment of this application provides an electronic device, including a memory, a processor, and a computer program stored in the memory and executable on the processor. The processor is configured to: when executing the computer program, implement the method according to any one of the third aspect or the fourth aspect.

According to a tenth aspect, an embodiment of this application provides a computer-readable storage medium. The computer-readable storage medium is configured to store a computer program. When the computer program is executed by a processor, the method according to any one of the third aspect or the fourth aspect is implemented.

According to an eleventh aspect, an embodiment of this application provides a computer program product. When the computer program product is configured to be run on an electronic device, the electronic device is enabled to perform the method according to any one of the third aspect or the fourth aspect.

According to a twelfth aspect, an embodiment of this application provides a chip system. The chip system includes a memory and a processor. The processor is configured to execute a computer program stored in the memory for implementation of the method according to any one of the third aspect or the fourth aspect.

Compared with a conventional technology, embodiments of this application have the following beneficial effects:

In the screen-on control method provided in this application, after the user performs the screen-on operation on the electronic device, the first processor may draw the screen-on interface in response to the screen-on operation. The second processor may perform the screen initialization operation in parallel when the first processor draws the screen-on interface. Subsequently, after determining that the second processor completes the screen initialization operation, the first processor may send the screen-on interface to the display for display.

In other words, in the screen-on control method provided in this application, the electronic device can execute different screen-on processing procedures in parallel by using the first processor and the second processor, so that screen-on processing procedures to be executed by a single processor can be reduced, to effectively reduce time taken by the electronic device to execute the screen-on processing procedures, accelerate a screen-on speed of the electronic device, and improve user experience. The method has strong usability and practicability.

### BRIEF DESCRIPTION OF DRAWINGS

FIG. 1 is a diagram of a structure of an electronic device according to an embodiment of this application;
FIG. 2 is an interaction flowchart of a screen-on control method according to an embodiment of this application;
FIG. 3 is an interaction flowchart of another screen-on control method according to an embodiment of this application;
FIG. 4 is an interaction flowchart of another screen-on control method according to an embodiment of this application;
FIG. 5 is an interaction flowchart of another screen-on control method according to an embodiment of this application;
FIG. 6 is a diagram of a structure of a smart watch according to an embodiment of this application;
FIG. 7 is an interaction flowchart of another screen-on control method according to an embodiment of this application;
FIG. 8 is a diagram of a scenario according to an embodiment of this application;
FIG. 9 is a diagram of another scenario according to an embodiment of this application;
FIG. 10 is a diagram of another scenario according to an embodiment of this application; and
FIG. 11 is a schematic flowchart of a screen-on control method according to an embodiment of this application.

### DESCRIPTION OF EMBODIMENTS

In the following description, for illustration instead of limitation, specific details such as a specific system structure and technology are provided, to thoroughly understand embodiments of this application. However, a person skilled in the art should understand that this application may also be implemented in other embodiments without these specific details. In other cases, detailed descriptions about well-known systems, apparatuses, circuits, and methods are omitted, to prevent unnecessary details from obscuring descriptions of this application.

It should be understood that, when used in this specification of this application and the appended claims, the term "include" or "comprise" indicates the presence of the described characteristic, whole, step, operation, element, and/or component, but does not exclude presence or addition of one or more other characteristics, wholes, steps, operations, elements, components, and/or sets thereof.

It should be further understood that, the term "and/or" used in this specification of this application and the appended claims refers to and includes any combination or all possible combinations of one or more of the associated listed items.

As used in this specification of this application and the appended claims, the term "if" may be interpreted as "when" or "once" or "in response to determining" or "in response to detecting" depending on the context. Similarly, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of this specification of this application and the appended claims, the terms "first", "second", "third", and the like are merely intended for a purpose of differentiated description, but shall not be understood as an indication or an implication of relative importance.

Reference to "one embodiment" or "some embodiments" described in this specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. Terms "include", "comprise", "have", and variations thereof all mean "including but not limited to", unless otherwise specified.

With development of the science and technology, various electronic devices with displays gradually enter thousands of households. When users use these electronic devices with displays, a large quantity of screen-on scenarios are required for the electronic devices.

For example, when a mobile phone is in a screen-off state, if the user presses a power button of the mobile phone, the mobile phone may light up a display in response to a pressing operation of the user, to display a lock screen interface.

For another example, when a smart watch is in a screen-off state, if the user raises a wrist, the smart watch may light up a display in response to a wrist-raising operation of the user, to display a watch face interface.

In these screen-on scenarios, a screen-on speed of the electronic device is closely related to user experience. A shorter time taken for screen-on of the electronic device indicates better user experience, and a longer time taken for screen-on of the electronic device indicates poorer user experience.

For example, in an example, it is assumed that after detecting a screen-on trigger operation of the user, the electronic device lights up the display to display a screen-on interface within 100 milliseconds. In this case, the user almost does not experience frame freezing, and may have good user experience.

In another example, it is assumed that after the electronic device detects the screen-on trigger operation of the user, it takes more than 300 milliseconds to light up the display and display the screen-on interface. In this case, the user may experience clear frame freezing, and user experience is poor.

However, in an existing screen-on solution, the electronic device usually performs, in a serial processing manner, a series of screen-on processing procedures such as image drawing, display power-on, display initialization, and backlight brightness calculation, which takes a long time and causes poor user experience.

In view of this, embodiments of this application provide a screen-on control method. An electronic device is configured with a first processor and a second processor. When detecting a screen-on operation of a user, the electronic device may control the first processor and the second processor to execute different screen-on processing procedures in parallel, so that a speed of executing the screen-on processing procedures by the electronic device is increased, to reduce, to some extent, time taken by the electronic device to execute the screen-on processing procedures, and help improve user experience. The method has strong usability and practicability.

The screen-on control method provided in embodiments of this application may be applied to an electronic device having a display, such as a mobile phone, a tablet computer, an in-vehicle device, an augmented reality (augmented reality, AR)/virtual reality (virtual reality, VR) device, a wearable device, a notebook computer, a desktop computer, an ultra-mobile personal computer (ultra-mobile personal computer, UMPC), a personal digital assistant (personal digital assistant, PDA), a netbook, or a smart screen. A specific type of the electronic device is not limited in embodiments of this application.

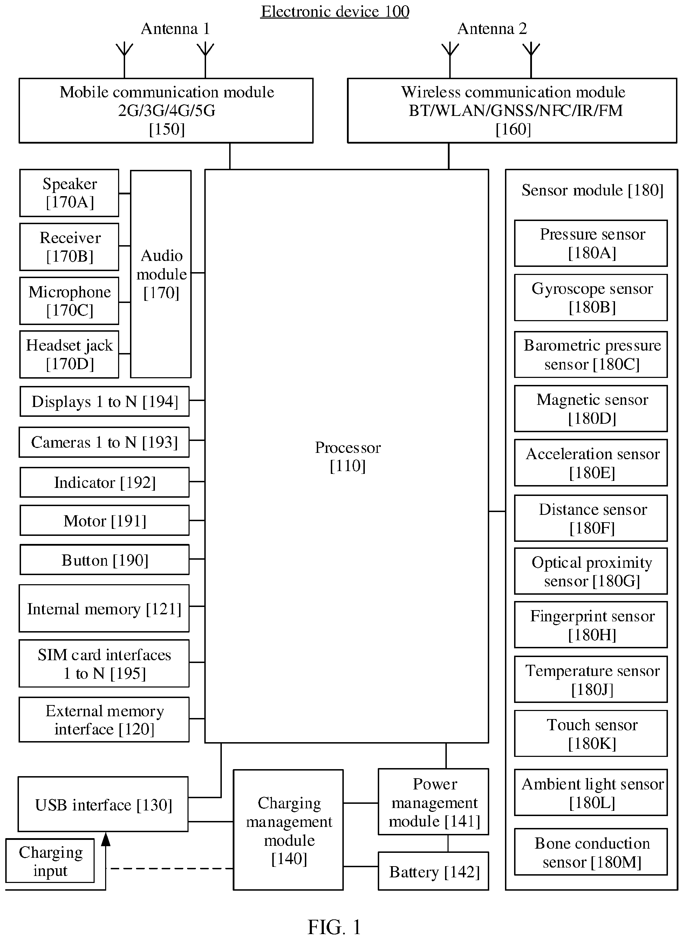

FIG. 1 is an example of a diagram of a structure of an electronic device 100 according to an embodiment of this application.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include a first processor and a second processor. The first processor and the second processor may be processors of a same type, or may be processors of different types. For example, the first processor and the second processor each may be any type of processors of an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a micro-controller unit (micro-controller Unit, MCU), a neural-network processing unit (neural-network processing unit, NPU), and/or the like. The controller may generate an operation control signal based on instruction operation code and a timing signal, to complete control of instruction reading and instruction execution.

Without loss of generality, in addition to the first processor and the second processor, the processor 110 may further include another processing unit. A quantity of processing units included in the processor 110 is not limited in this embodiment of this application.

In addition, the different processing units may be independent devices, or may be integrated into one or more processors. In other words, the first processor and the second processor may be independent devices, or the first processor and the second processor may be integrated into one processor.

In addition, a memory may be further disposed in the processor 110 to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage region may store data (such as audio data and a phone book) and the like that are created during use of the electronic device 100. In addition, the internal memory 121 may include a high-speed random access memory, or may include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 1.5mm open mobile electronic device platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations performed on a same touch position but with different touch operation intensities may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device 100. In some embodiments, angular velocities of the electronic device 100 around three axes (that is, an x axis, a y axis, and a z axis) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters; calculates, based on the angle, a distance for which a lens module needs to compensate; and enables the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C to assist in positioning and navigation.

The magnetic sensor 180D includes a Hall sensor. The electronic device 100 may detect opening and closing of a leather case of a flip cover by using the magnetic sensor 180D. In some embodiments, when the electronic device 100 is a flip phone, the electronic device 100 may detect opening and closing of the flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance through infrared light or a laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a smart cover mode or a pocket mode to automatically perform screen unlocking or locking.

The ambient light sensor 180L is configured to sense ambient light data. The electronic device 100 may adaptively adjust brightness of the display 194 based on the sensed ambient light data. The ambient light sensor 180L may be further configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142, to avoid a case in which the electronic device 100 is shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a pulse of a human body and receive a blood pressure beat signal. In some embodiments, the bone conduction sensor 180M may alternatively be disposed in a headset to be combined into a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse out heart rate information based on the blood pressure beat signal obtained by the bone conduction sensor 180M, to implement a heart rate detection function.

The button 190 includes a power button, a volume button, or the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network through the SIM card to implement functions such as calls and data communication. In some embodiments, the electronic device 100 uses an eSIM, namely, an embedded SIM card. The eSIM card may be embedded into the electronic device 100, and cannot be separated from the electronic device 100.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

With reference to the electronic device shown in FIG. 1 and a specific application scenario, the following describes in detail a screen-on control method provided in embodiments of this application.

As described above, in a conventional screen-on control solution, a processor in the electronic device usually executes a series of screen-on processing procedures in a serial processing manner, which takes a long time and causes poor user experience.

Therefore, in the screen-on control method provided in embodiments of this application, the electronic device may be configured with a first processor and a second processor. When detecting a screen-on operation of a user, the electronic device may execute different screen-on processing procedures in parallel by using the first processor and the second processor, to reduce, to some extent, time taken by the electronic device to execute the screen-on processing procedures, and improve a screen-on speed of the electronic device.

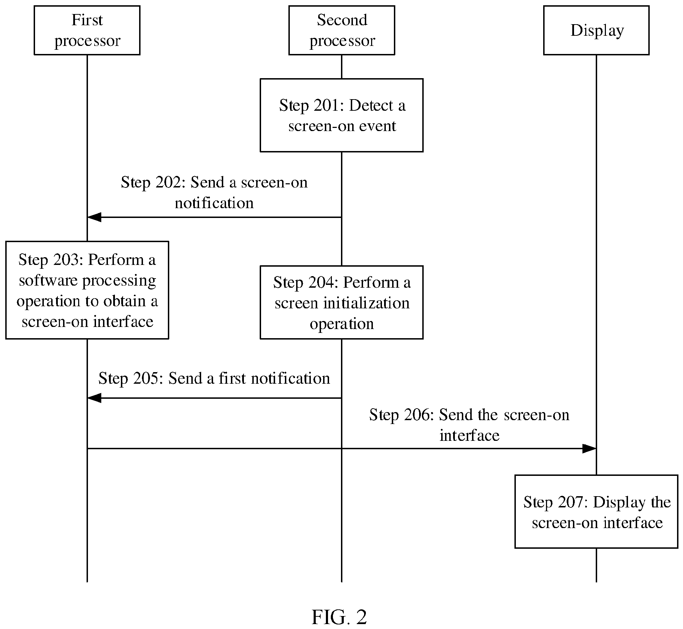

Specifically, FIG. 2 is an interaction diagram of a screen-on control method according to an embodiment of this application. As shown in FIG. 2, the screen-on control method includes the following steps.

Step 201: A second processor detects a screen-on operation of a user.

In this embodiment of this application, an electronic device is configured with a first processor and a second processor. The first processor and the second processor may be processors of a same type, or may be processors of different types.

For example, in an example, the first processor and the second processor may both be APs. In another example, the first processor may be an AP, and the second processor may be an MCU. In some other examples, the first processor and the second processor may alternatively be processors of another type.

When the electronic device is in a screen-off state, to reduce power consumption of the electronic device, the electronic device may control the first processor to enter a sleep state, and control the second processor to process sensor data collected by a sensor.

The sensor may include any one or more types of sensors of a pressure sensor, a gyroscope sensor, an acceleration sensor, an optical proximity sensor, a fingerprint sensor, a touch sensor, and the like.

After obtaining the sensor data, the second processor may analyze the sensor data to detect whether a screen-on event occurs.

The screen-on event may be understood as the screen-on operation performed by the user on the electronic device. A specific representation form of the screen-on operation may be set according to an actual requirement. For example, the screen-on operation may include any one or more operations of pressing a physical button of the electronic device by the user, performing a touch operation by the user on a display of the electronic device, moving the electronic device by the user along a specific motion trajectory, and the like.

Subsequently, if the second processor detects the screen-on event, the second processor may perform step 202.

Step 202: The second processor sends a screen-on notification to the first processor.

When detecting the screen-on event, the second processor may send the screen-on notification to the first processor. The screen-on notification indicates that the screen-on event occurs. In addition, in some embodiments, the screen-on notification may further indicate an event type of the screen-on event that occurs.

When receiving the screen-on notification, the first processor may determine, based on the screen-on notification, that the screen-on event occurs.

Without loss of generality, in some other embodiments, when the electronic device is in the screen-off state, the electronic device may alternatively control the second processor to enter the sleep state, and control the first processor to process the sensor data collected by the sensor.

In this case, the first processor may obtain the sensor data, and detect, based on the sensor data, whether the screen-on event occurs. Then, the first processor may send the screen-on notification to the second processor when detecting the screen-on event.

When receiving the screen-on notification, the second processor may determine, based on the screen-on notification, that the screen-on event occurs.

Alternatively, in some other embodiments, when the electronic device is in the screen-off state, the electronic device may control the first processor and the second processor to separately process the sensor data collected by the sensor.

In this case, the first processor and the second processor may separately obtain the sensor data, and detect, based on the sensor data, whether the screen-on event occurs.

In some other embodiments, the first processor and the second processor may alternatively detect the screen-on event in another manner. A specific manner of detecting the screen-on event by the first processor and the second processor is not limited in this embodiment of this application.

Step 203: The first processor performs a software processing operation to obtain a screen-on interface.

After determining that the screen-on event occurs, the first processor may perform the software processing operation to obtain the screen-on interface.

The software processing operation may include one or more of operations of waking up a frozen process, notifying an application related to the screen-on interface, drawing the screen-on interface, and the like.

For example, in an example, it is assumed that the first processor is in a deep sleep state, and processes in the first processor are all frozen.

In this case, the first processor may wake up the frozen processes after determining that the screen-on event occurs.

Then, the first processor may notify the application related to the screen-on interface at an application layer to obtain corresponding graphics data from the application, and draw the screen-on interface based on the graphics data.

In another example, it is assumed that the first processor is in a shallow sleep state, and processes in the first processor are not frozen.

In this case, after determining that the screen-on event occurs, the first processor may directly notify the application related to the screen-on interface at an application layer, to obtain corresponding graphics data from the application.

Then, the first processor may draw the screen-on interface based on the graphics data.

Step 204: The second processor performs a screen initialization operation.

When the first processor performs the software processing operation, the second processor may perform the screen initialization operation in parallel. The screen initialization operation may include powering on the display and sending an initialized timing parameter to the display.

A specific type of the timing parameter may be set according to an actual requirement. For example, the timing parameter may include any one or more parameters of a Hsync pulse width (Hsync Pulse Width, HPW), a Hsync back porch (Hsync Back Porch, HBP), a Hsync front porch (Hsync Front Porch, HFP), a Vsync pulse width (Vsync Pulse Width, VPW), a Vsync back porch (Vsync Back Porch, VBP), a Vsync front porch (Vsync Front Porch, VFP), and the like.

Step 205: The second processor sends a first notification to the first processor after completing the screen initialization operation.

After completing the screen initialization operation, the second processor may send the first notification to the first processor in a preset communication manner. The first notification indicates that the second processor completes the screen initialization operation.

After receiving the first notification, the first processor may determine, based on the first notification, that the second processor completes the screen initialization operation.

The first notification may be a notification actively sent by the second processor to the first processor; or the first notification may be a notification fed back by the second processor to the first processor in response to a first query instruction sent by the first processor.

For example, in some embodiments, the second processor may actively send the first notification to the first processor after completing the screen initialization operation.

In some other embodiments, after completing the screen initialization operation, the second processor may wait for a query instruction sent by the first processor.

Subsequently, when receiving the first query instruction sent by the first processor, the second processor may feed back the first notification to the first processor.

In addition, the preset communication manner may be set according to an actual requirement. For example, the communication manner may include any one or a combination of a plurality of communication manners such as an I2C interface, a UART interface, a GPIO interface, and the like. The communication manner used by the first processor and the second processor is not limited in this embodiment of this application.

Step 206: The first processor sends the screen-on interface to the display.

After obtaining the screen-on interface, the first processor may detect whether the first notification is received.

If the first processor has not received the first notification, it indicates that the second processor has not completed the screen initialization operation. In this case, the first processor may continue to wait for the first notification.

If the first processor receives the first notification, it indicates that the second processor completes the screen initialization operation.

In this case, the first processor may skip the screen initialization operation, and send the screen-on interface to the display.

It should be noted that, in step 205 and step 206, the second processor may send the first notification to the first processor, and the first processor may determine, based on the first notification, that the second processor completes the screen initialization operation.

Without loss of generality, in some other embodiments, the electronic device may alternatively set a first object (that is, a target storage unit) in a memory. The memory may be a register of the display, or may be another memory in the electronic device.

After completing the screen initialization operation, the second processor may modify a status of the first object from a first state to a second state (that is, a target value). Alternatively, the first object may automatically change from a first state to a second state after the second processor completes the screen initialization operation.

The first processor may periodically query the status of the first object. If it is detected by the first processor that the first object is in the first state, it indicates that the second processor has not completed the screen initialization operation, and the first processor may wait to execute a next query.

If it is detected by the first processor that the first object is in the second state, it indicates that the second processor completes the screen initialization operation.

In this case, the first processor may skip the screen initialization operation, and send the screen-on interface to the display.

Alternatively, in some other embodiments, the first processor may determine, in another manner, whether the second processor completes the screen initialization operation.

A specific manner in which the first processor determines whether the second processor completes the screen initialization operation is not limited in this embodiment of this application.

Step 207: The display displays the screen-on interface.

After receiving the screen-on interface, the display may display the screen-on interface.

According to the screen-on control method, when detecting the screen-on event, the electronic device may perform the software processing operation and the screen initialization operation in parallel by using the first processor and the second processor, so that screen-on processing procedures to be executed by a single processor are reduced, to accelerate a screen-on speed of the electronic device to some extent, and improve user experience.

In addition, when displaying the screen-on interface, the display may display the screen-on interface based on preset display brightness, or the display may display the screen-on interface based on dynamically adjusted display brightness.

When the display displays the screen-on interface based on the dynamically adjusted display brightness, the screen-on processing procedures may further include a brightness setting operation.

The brightness setting operation may be performed by the first processor, or the brightness setting operation may be performed by the second processor.

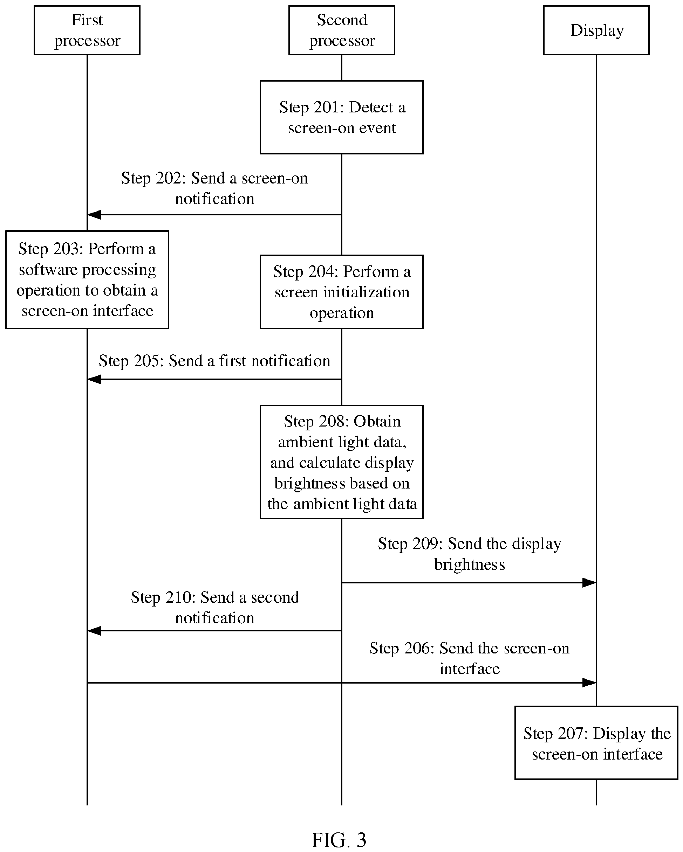

Specifically, in some embodiments, as shown in FIG. 3, after completing the screen initialization operation, the second processor may further proceed to perform step 208, step 209, and step 210.

Step 208: The second processor obtains ambient light data, and calculates display brightness based on the ambient light data.

After completing the screen initialization operation, the second processor may further perform a brightness setting operation.

In this case, the second processor obtains the ambient light data by using an ambient light sensor, and calculates the display brightness based on the ambient light data and a preset brightness algorithm.

The brightness algorithm may be set according to an actual requirement. For example, in some embodiments, the brightness algorithm may be represented as that the display brightness has a positive correlation with the ambient light data. In some other embodiments, the brightness algorithm may alternatively be set to another calculation manner. Specific content of the brightness algorithm is not limited in this embodiment of this application.

Step 209: The second processor sends the display brightness to the display.

After obtaining the display brightness through calculation, the second processor may send the display brightness to the display, to complete the brightness setting operation.

After receiving the display brightness, the display may store the display brightness in a local register.

Step 210: The second processor sends a second notification to the first processor.

After completing the brightness setting operation, the second processor may send the second notification to the first processor. The second notification indicates that the second processor completes the brightness setting operation.

When receiving the second notification, the first processor may determine, based on the second notification, that the second processor completes the brightness setting operation.

Then, the first processor may perform step 206 to send the screen-on interface to the display, so that the display displays the screen-on interface based on the display brightness set by the second processor.

Similarly, the second notification may be a notification actively sent by the second processor to the first processor; or the second notification may be a notification fed back by the second processor to the first processor in response to a second query instruction sent by the first processor.

For example, in some embodiments, the second processor may actively send the notification to the first processor after completing the brightness setting operation.

In some other embodiments, after completing the brightness setting operation, the second processor may wait for a query instruction sent by the first processor.

Subsequently, when receiving the second query instruction sent by the first processor, the second processor may feed back the second notification to the first processor.

In addition, in step 210, the second processor may send the second notification to the first processor, and the first processor may determine, based on the second notification, that the second processor completes the brightness setting operation.

Without loss of generality, in some other embodiments, the electronic device may set a second object in the memory. The memory may be a register of the display, or may be another memory in the electronic device.

After completing the brightness setting operation, the second processor may modify a status of the second object from a third state to a fourth state. Alternatively, the second object may automatically change from a third state to a fourth state after the second processor completes the brightness setting operation.

The first processor may periodically query the status of the second object. If it is detected by the first processor that the second object is in the third state, it indicates that the second processor has not completed the brightness setting operation, and the first processor may wait to execute a next query.

If it is detected by the first processor that the second object is in the fourth state, it indicates that the second processor completes the brightness setting operation.

In this case, the first processor may skip the brightness setting operation, and send the screen-on interface to the display, so that the display displays the screen-on interface based on the display brightness set by the second processor.

Alternatively, in some other embodiments, the first processor may determine, in another manner, whether the second processor completes the brightness setting operation.

A specific manner in which the first processor determines whether the second processor completes the brightness setting operation is not limited in this embodiment of this application.

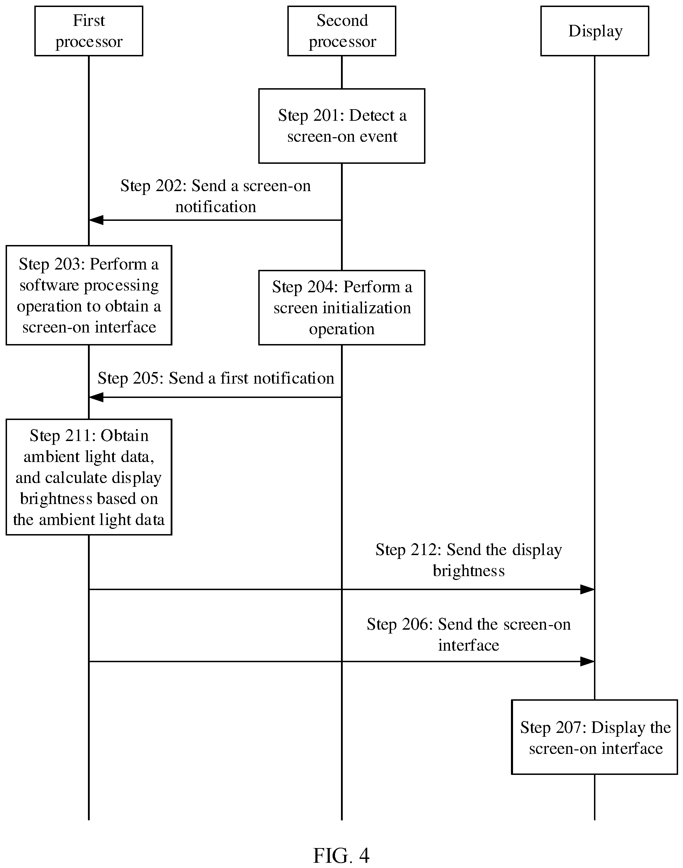

Without loss of generality, in some other embodiments, as shown in FIG. 4, after receiving the first notification, the first processor may further perform step 211 and step 212.

Step 211: The first processor obtains ambient light data, and calculates display brightness based on the ambient light data.

In this embodiment, the first processor may perform a brightness setting operation after receiving the first notification.

In this case, the first processor may invoke an ambient light sensor to obtain the ambient light data, and calculate the display brightness based on the ambient light data and a preset brightness algorithm.

Step 212: The first processor sends the display brightness to the display.

After obtaining the display brightness through calculation, the first processor may send the display brightness to the display, to complete the brightness setting operation.

When receiving the display brightness, the display may store the display brightness in a local register.

After completing the brightness setting operation, the first processor may proceed to perform step 206 to send the screen-on interface to the display, so that the display displays the screen-on interface based on the display brightness.

According to the foregoing method, the electronic device may perform the brightness setting operation by using the first processor or the second processor, so that the display displays the screen-on interface with the proper display brightness, which helps improve user experience.

In addition, in each of the described embodiments, the electronic device performs the screen initialization operation by using the second processor. Without loss of generality, in some other embodiments, the electronic device may alternatively perform the screen initialization operation by using the first processor.

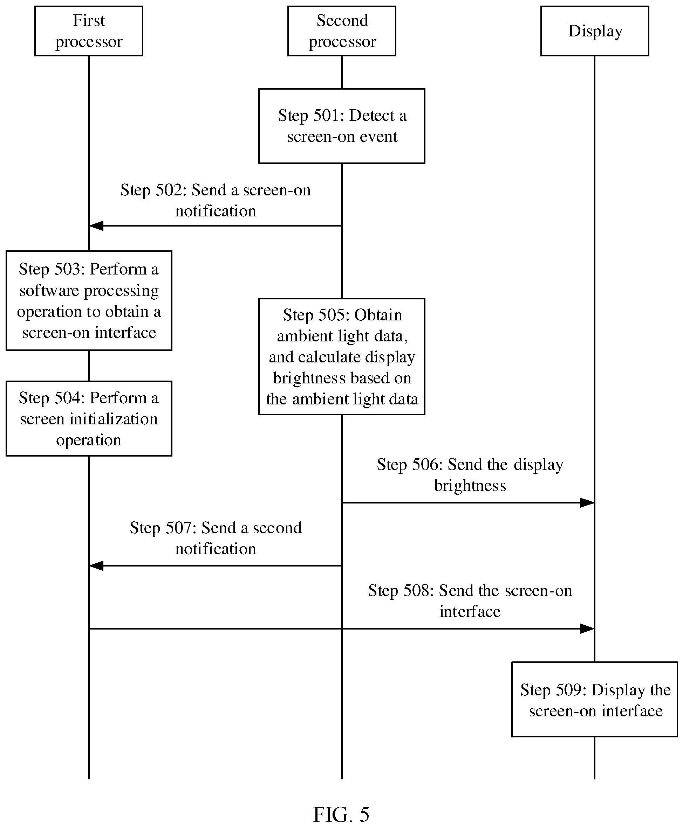

Specifically, FIG. 5 is an interaction flowchart of another screen-on control method according to an embodiment of this application. As shown in FIG. 5, the screen-on control method includes the following steps.

Step 501: A second processor detects a screen-on event.

Step 502: The second processor sends a screen-on notification to the first processor.

Step 503: The first processor performs a software processing operation to obtain a screen-on interface.

For specific content of steps 501 to 503, refer to related content of steps 201 to 203.

Step 504: The first processor performs a screen initialization operation.

In this embodiment, after completing the software processing operation, the first processor may proceed to perform the screen initialization operation, to power on a display and initialize a timing parameter of the display.

Step 505: The second processor obtains ambient light data, and calculates display brightness based on the ambient light data.

When the first processor performs the software processing operation and the screen initialization operation, the second processor may perform a brightness setting operation in parallel.

In this case, the second processor may obtain the ambient light data by using an ambient light sensor, and calculate the display brightness based on the ambient light data and a preset brightness algorithm.

Step 506: The second processor sends the display brightness to the display.

After obtaining the display brightness through calculation, the second processor may detect whether the first processor completes the screen initialization operation.

In some embodiments, the second processor may directly detect a status of the display, and determine, based on the status of the display, whether the first processor completes the screen initialization operation.

Specifically, the electronic device may set a third object in a memory. The third object indicates the status of the display. The memory may be a register of the display, or may be another memory in the electronic device.

After completing the screen initialization operation, the first processor may modify a status of the third object from a fifth state to a sixth state. Alternatively, the third object may automatically change from a fifth state to a sixth state after the first processor completes the screen initialization operation.

The second processor may periodically query the status of the third object. If it is detected by the second processor that the third object is in the fifth state, it indicates that the first processor has not completed the screen initialization operation. If it is detected by the second processor that the third object is in the sixth state, it indicates that the first processor completes the screen initialization operation.

In some other embodiments, after completing the screen initialization operation, the first processor may send a third notification to the second processor. The third notification indicates that the first processor completes the screen initialization operation.

In this case, after obtaining the display brightness through calculation, the second processor may detect whether the third notification is received.

If the second processor has not received the third notification, it indicates that the first processor has not completed the screen initialization operation. If the second processor receives the third notification, it indicates that the first processor completes the screen initialization operation.

When the second processor determines that the first processor has not completed the screen initialization operation, the second processor may keep waiting until the first processor completes the screen initialization operation.

When the second processor determines that the first processor completes the screen initialization operation, the second processor may send the display brightness to the display, to complete the brightness setting operation.

After receiving the display brightness, the display may store the display brightness in a local register.

Step 507: The second processor sends a second notification to the first processor.

After completing the brightness setting operation, the second processor may send the second notification to the first processor, to notify the first processor that the brightness setting operation is completed.

Step 508: The first processor sends the screen-on interface to the display.

After receiving the second notification, the first processor may skip the brightness setting operation, and send the screen-on interface to the display.

Step 509: The display displays the screen-on interface.

After receiving the screen-on interface, the display may display the screen-on interface based on the display brightness.

According to the foregoing screen-on control method, when detecting the screen-on event, the electronic device may perform the software processing operation and the screen initialization operation by using the first processor, and perform the brightness setting operation in parallel by using the second processor, so that screen-on processing procedures to be executed by a single processor are reduced, to accelerate a screen-on speed of the electronic device to some extent, and improve user experience.

For ease of understanding, the following describes the screen-on control method in detail with reference to an actual application scenario.

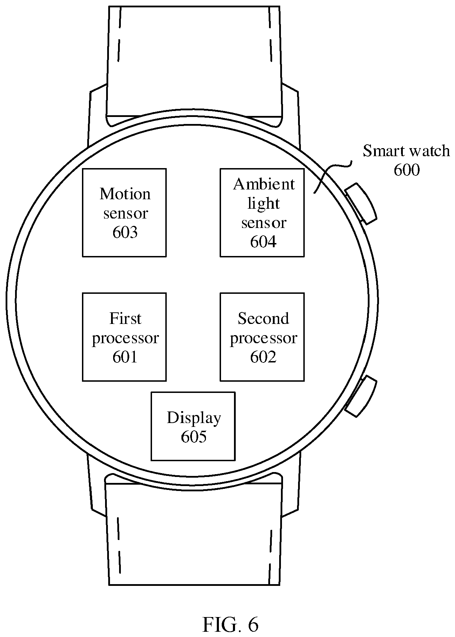

As shown in FIG. 6, in this example, the electronic device may be a smart watch 600. The smart watch 600 is configured with a first processor 601, a second processor 602, a motion sensor 603, an ambient light sensor 604, and a display 605.

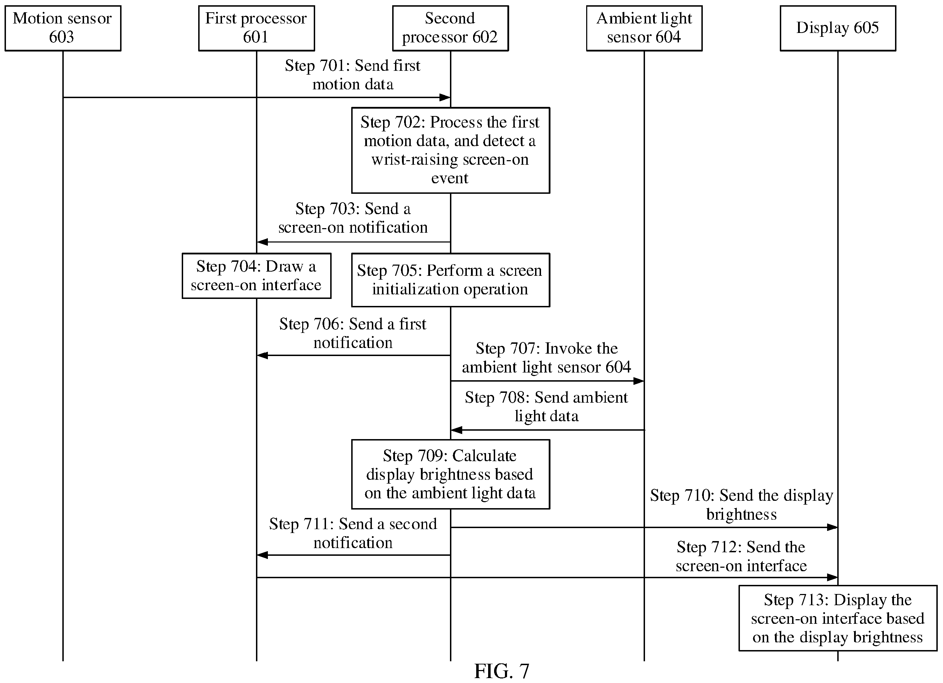

As shown in FIG. 7, when a user performs a wrist-raising operation on the smart watch 600, an interaction process of components in the smart watch 600 includes the following steps.

Step 701: The motion sensor 603 sends first motion data to the second processor 602.

In this example, when the smart watch 600 is in a screen-off state, the first processor 601 may enter a sleep state, and the second processor 602 may process the motion data collected by the motion sensor 603.

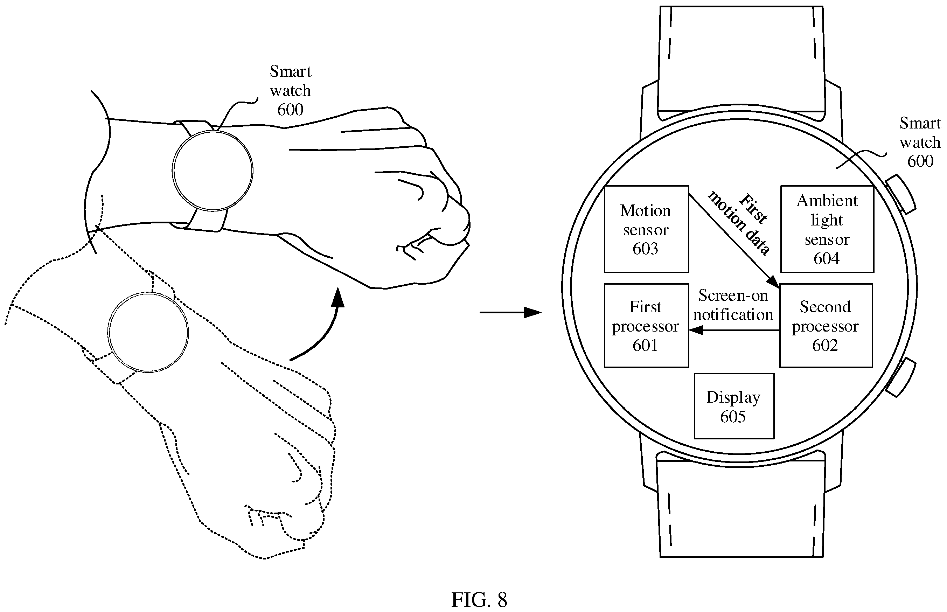

In this case, as shown in FIG. 8, when the user performs a wrist-raising operation on the smart watch 600, the motion sensor 603 may send the first motion data to the second processor 602.

Step 702: The second processor 602 processes the first motion data, and detects a wrist-raising screen-on event.

After receiving the first motion data, the second processor 602 may process the first motion data to obtain a first motion trajectory of the smart watch 600.

Then, the second processor 602 may detect the wrist-raising screen-on event based on the first motion trajectory.

Step 703: The second processor 602 sends a screen-on notification to the first processor 601.

After detecting the wrist-raising screen-on event, the second processor 602 may send the screen-on notification to the first processor 601, to notify the first processor 601 to perform a corresponding screen-on processing procedure.

Step 704: The first processor 601 draws a screen-on interface.

After receiving the screen-on notification, the first processor 601 may perform a software processing operation, and notify an application related to the screen-on interface, to obtain corresponding graphics data from the application, and draw the screen-on interface based on the graphics data.

Step 705: The second processor 602 performs a screen initialization operation.

When the first processor 601 performs the software processing operation, the second processor 602 may perform the screen initialization operation in parallel, to power on the display 605 and initialize a timing parameter of the display 605.

Step 706: The second processor 602 sends a first notification to the first processor 601.

After completing the screen initialization operation, the second processor 602 may send the first notification to the first processor 601. The first notification indicates that the second processor 602 completes the screen initialization operation.

Step 707: The second processor 602 invokes the ambient light sensor 604.

After completing the screen initialization operation, the second processor 602 may further perform a brightness setting operation.

In this case, the second processor 602 may invoke the ambient light sensor 604 to obtain ambient light data by using the ambient light sensor 604.

Step 708: The ambient light sensor 604 sends the ambient light data to the second processor 602.

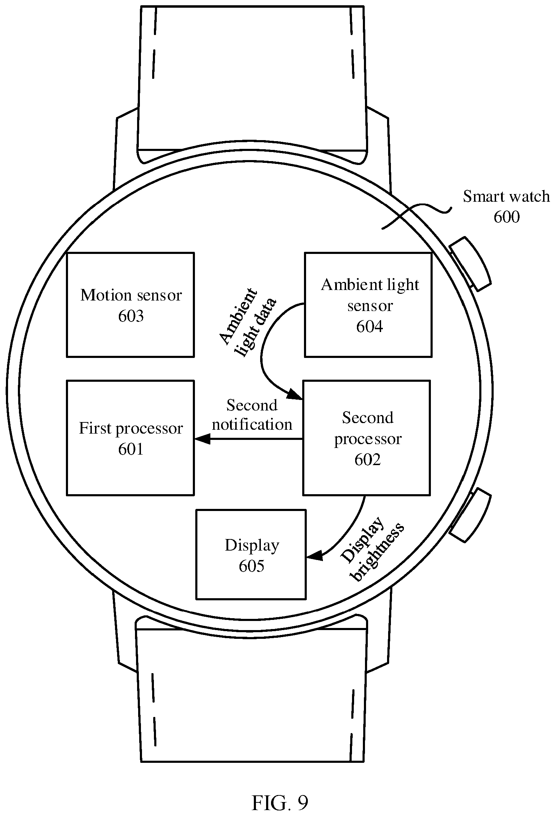

As shown in FIG. 9, after the second processor 602 invokes the ambient light sensor 604, the ambient light sensor 604 may collect the ambient light data around the smart watch 600, and feed back the ambient light data to the second processor 602.

Step 709: The second processor 602 calculates display brightness based on the ambient light data.

After receiving the ambient light data, the second processor 602 may calculate the display brightness based on the ambient light data and a preset brightness algorithm.

Step 710: The second processor 602 sends the display brightness to the display 605.

After obtaining the display brightness through calculation, the second processor 602 may send the display brightness to the display 605, to complete the brightness setting operation.

After receiving the display brightness, the display 605 may store the display brightness in a register of the display 605.

Step 711: The second processor 602 sends a second notification to the first processor 601.

After completing the brightness setting operation, the second processor 602 may send the second notification to the first processor 601. The second notification indicates that the second processor 602 completes the brightness setting operation.

Step 712: The first processor 601 sends the screen-on interface to the display 605.

After drawing the screen-on interface, the first processor 601 may skip the screen initialization operation based on the first notification, and skip the brightness setting operation based on the second notification.

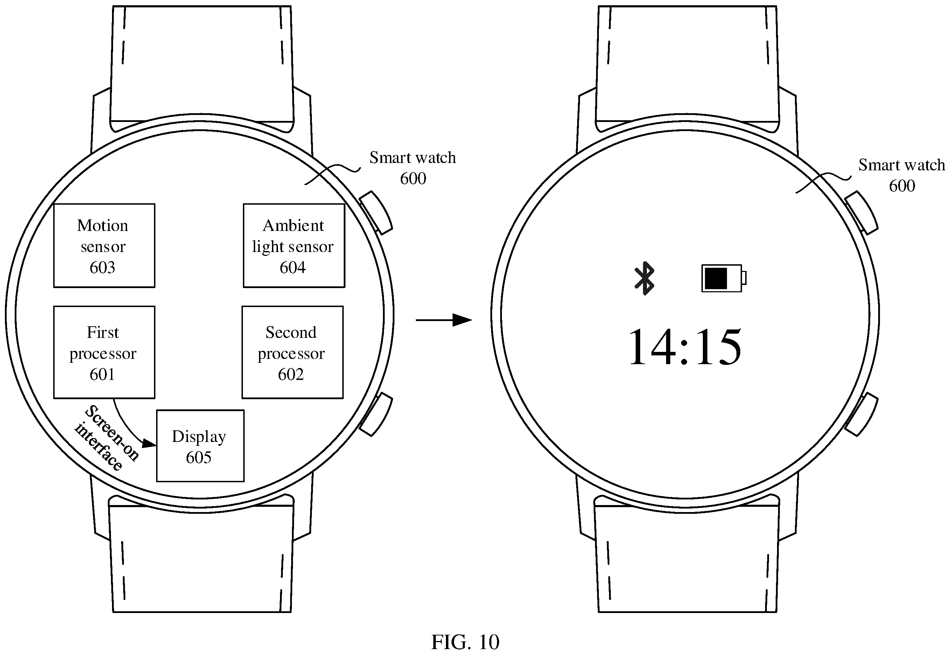

Subsequently, as shown in FIG. 10, the first processor 601 may send the screen-on interface to the display 605.

Step 713: The display 605 displays the screen-on interface based on the display brightness.

After receiving the screen-on interface, the display 605 may display the screen-on interface based on the display brightness, to complete the screen-on procedures.

It can be learned from the foregoing example that, in a brightness control method provided in this example, the smart watch 600 may draw the screen-on interface by using the first processor 601, and perform the screen initialization operation and the brightness setting operation in parallel by using the second processor 602. After drawing the screen-on interface, the first processor 601 may skip the screen initialization operation and the brightness setting operation, and directly send the screen-on interface to the display 605.

According to the foregoing screen-on control method, screen-on processing procedures to be executed by a single processing in the smart watch 600 can be effectively reduced, and a screen-on speed can be improved.

For example, it is assumed that it takes 90 milliseconds for the electronic device to draw the screen-on interface, 50 milliseconds to perform the screen initialization operation, and 30 milliseconds to perform the brightness setting operation.

In a conventional screen-on control solution, the electronic device needs to perform drawing of the screen-on interface, the screen initialization operation, and the brightness setting operation in a serial processing manner, and time taken for screen-on is 90+50+30=170 milliseconds.

However, in the screen-on control method provided in the foregoing example, it takes 90 milliseconds for the first processor to draw the screen-on interface, and it takes a total of 50+30=80 milliseconds for the second processor to perform the screen initialization operation and the brightness setting operation. In this case, time taken for screen-on of the electronic device is a larger one of 90 milliseconds and 80 milliseconds, namely, 90 milliseconds.

Without loss of generality, in some other possible examples, the electronic device may alternatively control the first processor to draw the screen-on interface and perform the screen initialization operation, and control the second processor to perform the brightness setting operation.

In this case, it takes a total of 90+50=140 milliseconds for the first processor to draw the screen-on interface and perform the initialization operation, and it takes 30 milliseconds for the second processor to perform the brightness setting operation. Time taken for screen-on of the electronic device is a larger one of 140 milliseconds and 30 milliseconds, namely, 140 milliseconds.

In some other possible examples, the electronic device may alternatively control the first processor to draw the screen-on interface and perform the brightness setting operation, and control the second processor to perform the screen initialization operation.

In this case, it takes a total of 90+30=120 milliseconds for the first processor to draw the screen-on interface and perform the brightness setting operation, and it takes 50 milliseconds for the second processor to perform the screen initialization operation. Time taken for screen-on of the electronic device is a larger one of 120 milliseconds and 50 milliseconds, namely, 120 milliseconds.

It can be fully described from the foregoing example that, in the screen-on control method provided in this embodiment of this application, the electronic device can execute different screen-on processing procedures in parallel by using the first processor and the second processor. This can effectively reduce a quantity of screen-on processing procedures to be executed by a single processor in the electronic device, reduce time taken by the electronic device to execute the screen-on processing procedures, accelerate a screen-on speed, and improve user experience.

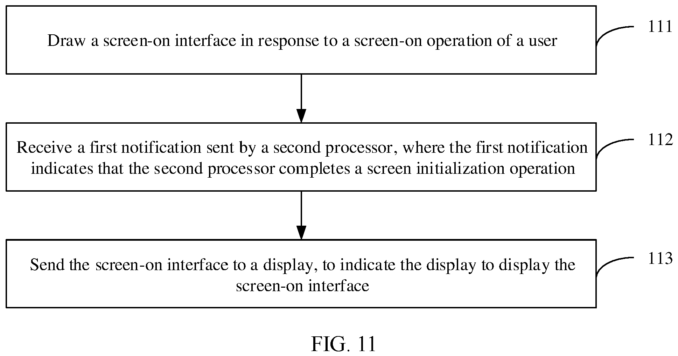

With reference to the descriptions of the foregoing embodiments, an embodiment of this application provides another screen-on control method from a perspective of a first processor. As shown in FIG. 11, the screen-on control method includes the following steps.

Step 111: A first processor draws a screen-on interface in response to a screen-on operation of a user.

In this embodiment, the electronic device may be configured with a first processor and a second processor. The first processor and the second processor may execute different screen-on processing procedures in parallel.

When the user wants screen-on of the electronic device, the user may perform the screen-on operation on the electronic device.

A representation form of the screen-on operation may be set according to an actual requirement. For example, the screen-on operation may include any one or more events of pressing a physical button of the electronic device by the user, performing a touch operation by the user on a display of the electronic device, moving the electronic device by the user along a specific motion trajectory, and the like.

When detecting the screen-on operation, the first processor may perform a software processing operation in response to the screen-on operation, to draw the screen-on interface.

A manner in which the first processor detects the screen-on operation may be set according to an actual requirement.

For example, in some embodiments, the first processor may obtain sensor data collected by a sensor, and process the sensor data, to detect whether the screen-on operation occurs.

In some other embodiments, the electronic device may alternatively process the sensor data by using the second processor, to detect whether the screen-on operation occurs.

If the second processor detects the screen-on operation, the second processor may send a screen-on notification to the first processor. The screen-on notification indicates that the screen-on operation occurs.

Subsequently, when receiving the screen-on notification, the first processor may determine, based on the screen-on notification, that the screen-on operation occurs.

In some other embodiments, the first processor may alternatively detect the screen-on operation in another manner. A specific manner in which the first processor detects the screen-on operation is not limited in this embodiment of this application.

Step 112: The first processor receives a first notification sent by the second processor, where the first notification indicates that the second processor completes a screen initialization operation.

When the first processor performs the software processing operation, the second processor may perform the screen initialization operation in parallel in response to the screen-on operation, to power on the display and send an initialized timing parameter to the display.

After completing the screen initialization operation, the second processor may send the first notification to the first processor. The first notification indicates that the second processor completes the screen initialization operation.

After receiving the first notification, the first processor may skip the screen initialization operation based on the first notification.

Step 113: The first processor sends the screen-on interface to the display, to indicate the display to display the screen-on interface.

After skipping the screen initialization operation, the first processor may send the drawn screen-on interface to the display, to indicate the display to display the screen-on interface.

After receiving the screen-on interface, the display may display the screen-on interface, to complete the screen-on processing procedures of the electronic device.

According to the foregoing method, when detecting the screen-on operation of the user, the electronic device can execute different screen-on processing procedures in parallel by using the first processor and the second processor. This effectively reduces a quantity of screen-on processing procedures to be executed by a single processor in the electronic device, reduces time taken by the electronic device to execute the screen-on processing procedures, accelerates a screen-on speed, and improves user experience.

In addition, in some embodiments, before sending the screen-on interface to the display, the first processor may further invoke an ambient light sensor to obtain ambient light data collected by the ambient light sensor.

Then, the first processor may calculate display brightness based on the ambient light data and a preset brightness algorithm, and send the display brightness to the display, to complete a brightness setting operation.

After completing the brightness setting operation, the first processor may send the screen-on interface to the display, to indicate the display to display the screen-on interface based on the display brightness.

In some other embodiments, the brightness setting operation may alternatively be performed by the second processor. After completing the brightness setting operation, the second processor may send a second notification to the first processor. The second notification indicates that the second processor completes the brightness setting operation.

After receiving the second notification, the first processor may skip the brightness setting operation, and send the drawn screen-on interface to the display, to indicate the display to display the screen-on interface based on the display brightness.

Without loss of generality, in some other embodiments, the first processor may alternatively perform the software processing operation and the screen initialization operation, and the second processor performs the brightness setting operation.

Alternatively, in some other embodiments, the screen-on processing procedures may further include other operations, and the electronic device may control the first processor and the second processor to perform the other operations in parallel.

It should be understood that a sequence of the described steps does not mean an execution sequence in the foregoing embodiments. The execution sequence of the processes should be determined based on functions and internal logic of the processes, and should not constitute any limitation on the implementation processes of embodiments of this application.

The steps described in the foregoing embodiments are not all necessary steps. In an actual application scenario, the screen-on control method used by the electronic device may have more or fewer steps than those in the foregoing embodiments, or some of the steps described above are implemented.

For example, the software processing operation, the screen initialization operation, and the brightness setting operation are merely examples of the screen-on processing procedure. In some other embodiments, some operations may be added, some operations may be deleted, and/or some operations may be replaced in the screen-on processing procedures.

In this case, correspondingly, some steps may be added, some steps may be deleted, and/or some steps may be replaced in the screen-on control method implemented by the electronic device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A skilled person may use different methods to implement the described functions for each particular application, but this implementation should not be considered as beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated module/unit is implemented in the form of software functional unit and sold or used as an independent product, the integrated module/unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code. The computer program code may be in a source code form, an object code form, an executable file form, some intermediate forms, or the like. The computer-readable storage medium may include any entity or apparatus capable of carrying the computer program code, a recording medium, a USB flash drive, a removable hard disk, a magnetic disk, an optical disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to the legislation and patent practice, the computer-readable storage medium does not include an electrical carrier signal or a telecommunication signal.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A screen-on control method, applied to an electronic device, wherein the electronic device is configured with a first processor and a second processor, and the method comprises:
drawing, by the first processor, a screen-on interface in response to a screen-on operation of a user;
performing, by the second processor, a screen initialization operation in parallel when the first processor draws the screen-on interface;
sending, by the first processor, the screen-on interface to a display after determining that the second processor completes the screen initialization operation; and
displaying, by the display, the screen-on interface.

2. The method according to claim 1, wherein after the performing, by the second processor, a screen initialization operation in parallel, the method further comprises:
sending, by the second processor, display brightness to the display, wherein the display brightness is obtained by the second processor through calculation based on ambient light data; and
correspondingly, the displaying, by the display, the screen-on interface comprises:
displaying, by the display, the screen-on interface based on the display brightness.

3. The method according to claim 2, wherein the sending, by the first processor, the screen-on interface to a display after determining that the second processor completes the screen initialization operation comprises:
after determining that the second processor sends the display brightness to the display, sending, by the first processor, the screen-on interface to the display.

4. The method according to claim 1, wherein after it is determined that the second processor completes the screen initialization operation, the method further comprises:
sending, by the first processor, display brightness to the display, wherein the display brightness is obtained by the first processor through calculation based on ambient light data; and
correspondingly, the displaying, by the display, the screen-on interface comprises:
displaying, by the display, the screen-on interface based on the display brightness.

5. The method according to any one of claims 1 to 4, wherein before the drawing, by the first processor, a screen-on interface, the method further comprises:
detecting, by the second processor, the screen-on operation of the user, and sending a screen-on notification to the first processor; and
correspondingly, the drawing, by the first processor, a screen-on interface in response to a screen-on operation of a user comprises:
drawing, by the first processor, the screen-on interface in response to the screen-on notification.

6. The method according to any one of claims 1 to 4, wherein the drawing, by the first processor, a screen-on interface in response to a screen-on operation of a user comprises:
detecting, by the first processor, the screen-on operation of the user; and
drawing, by the first processor, the screen-on interface in response to the screen-on operation.

7. The method according to any one of claims 1 to 6, wherein the performing, by the second processor, a screen initialization operation in parallel comprises:
powering on, by the second processor, the display, and sending an initialized timing parameter to the display.

8. The method according to any one of claims 1 to 7, wherein after the performing, by the second processor, a screen initialization operation in parallel, the method further comprises:
sending, by the second processor, a first notification to the first processor after completing the screen initialization operation; and
correspondingly, the sending, by the first processor, the screen-on interface to a display after determining that the second processor completes the screen initialization operation comprises:
sending, by the first processor, the screen-on interface to the display in response to the first notification.

9. The method according to any one of claims 1 to 7, wherein the sending, by the first processor, the screen-on interface to a display after determining that the second processor completes the screen initialization operation comprises:
detecting, by the first processor, a value of a target storage unit; and
after it is detected that the value of the target storage unit is a target value, sending, by the first processor, the screen-on interface to the display, wherein the target value indicates that the second processor completes the screen initialization operation.

10. The method according to any one of claims 1 to 9, wherein the first processor is an application processor, and the second processor is a micro-controller unit.

11. A screen-on control method, applied to an electronic device, wherein the electronic device is configured with a first processor and a second processor, and the method comprises:
drawing, by the first processor, a screen-on interface in response to a screen-on operation of a user;
performing, by the first processor, a screen initialization operation;
sending, by the first processor, the screen-on interface to a display after completing the screen initialization operation;
when the first processor draws the screen-on interface, and/or the first processor performs the screen initialization operation, calculating, by the second processor, display brightness in parallel based on ambient light data;
sending, by the second processor, the display brightness to the display after determining that the first processor completes the screen initialization operation; and
displaying, by the display, the screen-on interface based on the display brightness.

12. A screen-on control method, applied to a first processor and comprising:
drawing a screen-on interface in response to a screen-on operation of a user; and
sending, after determining that a second processor completes a screen initialization operation, the screen-on interface to a display for display.

13. The method according to claim 12, wherein the sending, after determining that a second processor completes a screen initialization operation, the screen-on interface to a display for display comprises:
detecting a value of a target storage unit; and
after it is detected that the value of the target storage unit is a target value, sending the screen-on interface to the display for display, wherein the target value indicates that the second processor completes the screen initialization operation.

14. The method according to claim 12, wherein the sending, after determining that a second processor completes a screen initialization operation, the screen-on interface to a display for display comprises:
receiving a first notification sent by the second processor, wherein the first notification indicates that the second processor completes the screen initialization operation; and
sending, in response to the first notification, the screen-on interface to the display for display.

15. The method according to claim 14, wherein the method further comprises:
receiving a second notification sent by the second processor, wherein the second notification indicates that the second processor sends display brightness to the display, and the display brightness is obtained by the second processor through calculation based on ambient light data.

16. The method according to claim 15, wherein the sending, in response to the first notification, the screen-on interface to the display for display comprises:
sending, in response to the first notification and the second notification, the screen-on interface to the display for display.

17. The method according to claim 12, wherein after it is determined that the second processor completes the screen initialization operation, the method further comprises:
sending display brightness to the display, wherein the display brightness is obtained by the first processor through calculation based on ambient light data.

18. A screen-on control method, applied to a second processor and comprising:
obtaining ambient light data in response to a screen-on operation of a user, and calculating display brightness based on the ambient light data; and
sending the display brightness to a display after determining that a first processor completes a screen initialization operation.

19. An electronic device, comprising a first processor, a second processor, and a display, wherein
the first processor is configured to draw a screen-on interface in response to a screen-on operation of a user;
the second processor is configured to perform a screen initialization operation in parallel when the first processor draws the screen-on interface;
the first processor is further configured to send the screen-on interface to the display after determining that the second processor completes the screen initialization operation; and
the display is configured to display the screen-on interface.

20. An electronic device, comprising a memory, a processor, and a computer program stored in the memory and executable on the processor, wherein the processor is configured to: when executing the computer program, implement the method according to any one of claims 12 to 18.

21. A computer-readable storage medium, wherein the computer-readable storage medium is configured to store a computer program; and when the computer program is executed by a processor, the method according to any one of claims 12 to 18 is implemented.

22. A chip system, wherein the chip system comprises a memory and a processor, and the processor is configured to execute a computer program stored in the memory for implementation of the method according to any one of claims 12 to 18.
